# EUROPEAN PATENT SPECIFICATION

(11) **EP 2 165 857 B1**
(45) Date of publication and mention of the grant of the patent: **05.09.2012**
(21) Application number: 08764901.8
(22) Date of filing: 30.05.2008
(51) Int. Cl.: B60C 11/04, B60C 11/13

(54) **PNEUMATIC TIRE**
LUFTREIFEN
PNEUMATIQUE

(30) Priority: 04.06.2007 JP 2007148180
(43) Date of publication of application: 24.03.2010
(73) Proprietor: Toyo Tire & Rubber Co. Ltd., Osaka-shi, Osaka 550-8661 (JP)
(72) Inventor: KAJI, Shinichi, Osaka-shi Osaka 550-8661 (JP)
(74) Representative: Sajda, Wolf E.
(86) International application number: PCT/JP2008/059983
(87) International publication number: WO 2008/149791

(56) References cited:
- JP-A- 05 338 414
- JP-A- 06 239 107
- JP-A- 07 232 514
- JP-A- 11 180 112
- JP-A- 60 189 608
- JP-A- 2002 211 210
- JP-A- 2003 054 220
- JP-A- 2005 324 775
- JP-A- 2007 112 421
- US-A- 5 417 269

## Description

### TECHNICAL FIELD

The present invention relates to a pneumatic tire provided with a main groove extending along a tire circumferential direction in a tread surface, in which a discharging performance of a stone that gets into the main groove can be improved.

### BACKGROUND ART

When traveling on a gravel road or the like which is not leveled, a so-called stone holding in which a stone on the road is wedged between main grooves of a tread surface in a tire may be generated. Further, if the tire rolls in a state in which such stone holding has occurred, the wedged stone presses a groove bottom, or a force intending to push and expand the main groove is repeatedly applied, thereby causing a damage such as a groove bottom crack.

Accordingly, a projection has been conventionally provided in the groove bottom of the main groove so as to prevent the stone holding. For example, the following Patent Documents 1 and 2 describe a pneumatic tire in which a plurality of projections are provided in the groove bottom of the main groove, and the projection is made higher at a position in which the stone holding tends to be generated according to a pattern design, than the other portions. Further, the following Patent Document 3 describes a pneumatic tire in which projections having different heights are provided in the groove bottom of the main groove in a pattern repeating concavity and convexity, thereby achieving a reduction of a car exterior noise in addition to a prevention of the stone holding.

However, in the above-mentioned tire, it is possible to somewhat inhibit the stone holding from being generated, however, there is a risk that the stone getting into the main groove stays at a low position of the projection, and there is fear that a repeated grounding of this portion damages the tire. On the contrary, it is possible to consider setting each of the projections a little higher, however, in that case, there is generated a problem that the stone is held between the projection having the low rigidity and the side wall of the main groove, and a wet performance (a traveling performance on a wet road surface) is lowered due to a reduced volumetric capacity of the groove.

On the other hand, as disclosed in the following Patent Document 4, there has been known a pneumatic tire in which a projection continuously extending in the tire circumferential direction is provided in the groove bottom of the main groove, and an outer peripheral surface of the projection is formed in a wavy shape in which curved concavity and convexity are alternately repeated. This tire is structured such as to discharge the stone by an elastic restoring force of the convex portion having the low rigidity based on a rigidity difference generated between the concave portion and the convex portion of the projection.
However, since the concave portion and the convex portion are continuously provided, it is hard to give a great change in rigidity even by varying the heights, and it is considered that the discharging characteristic of the stone is not greatly improved. Further, there is generated a problem that the wet performance is lowered due to a reduced volumetric capacity of the groove.

| | |
|---|---|
| Patent Document 1: | Japanese Unexamined Patent Application Publication JP-A-2003-054 220 |
| Patent Document 2: | Japanese Unexamined Patent Application Publication JP-A-11-180 112 |
| Patent Document 3: | Japanese Unexamined Patent Application Publication JP-A-2002-21 210 |
| Patent Document 4: | Japanese Unexamined Patent Application Publication JP-A-6-239 107 |

### DISCLOSURE OF THE INVENTION

### PROBLEMS TO BE SOLVED BY THE INVENTION

The present invention is made in view of the above-mentioned circumstances, and an object of the present invention is to provide a pneumatic tire which can improve a discharging characteristic of a stone getting into a main groove, can reduce a car exterior noise, and which is also excellent in a wet performance.

### MEANS FOR SOLVING THE PROBLEMS

The object can be achieved by the following present invention. That is, the present invention provides a pneumatic tire comprising a main groove extending along a tire circumferential direction in a tread surface, wherein a plurality of projections having different heights are provided in a groove bottom of the main groove in such a manner that an outer peripheral surface is inclined so as to repeat trough portions depressed to an inner side in a tire diametrical direction and peak portions protruding to an outer side in the tire diametrical direction along the tire circumferential direction.

In accordance with the present invention, the plurality of projections having the different heights are provided in the grove bottom of the main groove such that the outer peripheral surface is inclined so as to repeat the trough portions depressed to the inner side in the tire diametrical direction and the peak portions protruding to the outer side in the tire diametrical direction along the tire circumferential direction, the stone getting into the main groove is hard to stay at the specific position.
Further, since each of the projections which are varied in height can move the stone in the main groove via the inclined outer peripheral surface when elastically deforming along the tire circumferential direction, it is possible to discharge the stone out of the main groove by the centrifugal force arising in connection with the tire rolling motion in cooperation with the effect that the stone is hard to stay as mentioned above.

Further, in accordance with the present invention, since the projections having the different heights are provided in the groove bottom of the main groove along the tire circumferential direction, it is possible to intermittently or continuously change a frequency band of a pipe resonance noise by varying the volumetric capacity of the closed space formed by the main groove and the road surface at the time of grounding.
Accordingly, it is possible to inhibit the frequency of the pipe resonance noise from coinciding with the frequency generating a pitch peak noise which is defined by a pattern pitch of the tread surface and a traveling speed, and it is possible to prevent the peak of the noise level from being generated so as to reduce the car exterior noise. Further, a reducing margin of the groove volumetric capacity is less compared with the case where the projection continuously extending in the tire circumferential direction is provided, and it is possible to satisfactorily secure the wet performance.

In accordance with the present invention, the trough portion can be formed by inclining the outer peripheral surfaces of the projections which are adjacent to each other in the tire circumferential direction to the inner side in the tire diametrical direction toward the direction coming close to each other. With such a structure, in the case where the stone gets into the trough portion, it is possible to move the stone by deformation of the projections on both sides configuring the trough portion, and it is possible to achieve a more excellent stone discharging performance.

In the above structure, it is preferable that a maximum height of the projection in the peak portion is between 10 and 35 % a depth of the main groove from the groove bottom of the main groove, and a minimum height of the projection in the trough portion is equal to or more than 2.5 mm from the groove bottom of the main groove.
Since the maximum height of the projection in the peak portion is between 10 and 35 % the depth of the main groove, it is possible to properly secure the rigidity of the projection, and it is possible to satisfactorily secure the wet performance by inhibiting the groove volumetric capacity from being reduced, as well as it is possible to inhibit the stone from being held between the projection and the side wall of the main groove.
Further, since the minimum height of the projection in the trough portion is equal to or more than 2.5 mm, it is possible to effectively prevent the stone from reaching the groove bottom so as to more suitably prevent the tire from being damaged.

In the above structure, it is preferable that a part or all of the trough portions are depressed in a V-shaped form to the inner side in the tire diametrical direction, and a part or all of the peak portions protrude in an inverted V-shaped form to the outer side in the tire diametrical direction. With such a structure, since the trough portion is depressed in the V-shaped form to the inner side in the tire diametrical direction, it is possible to effectively prevent the stone from staying within the main groove, thereby the stone is easily moved along the tire circumferential direction, and a more excellent stone discharging performance can be achieved.
Further, since the peak portion protrudes in the inverse V-shaped form to the outer side in the tire diametrical direction, the wall surface in the tire circumferential direction of one of the projections forming the peak portion does not protrude largely from the other, and it is possible to prevent the deficit or the like from being generated by the stone contact.

### BRIEF DESCRIPTION OF THE DRAWINGS

- Fig. 1: is an expansion plan view showing one example of a tread pattern of a pneumatic tire according to the present invention.
- Fig. 2: is a cross sectional view as seen from an arrow A-A in Fig. 1.
- Fig. 3: is a cross sectional view as seen from an arrow B-B in Fig. 1.
- Fig. 4: is a view describing a stone discharging operation in the present invention.
- Fig. 5: is a cross sectional view of a main part showing the other example of a projection in the present invention.

### DESCRIPTION OF THE REFERENCE NUMERALS

- 1: Main groove
- 10: Projection
- 10a: Outer peripheral surface
- 11: Trough portion
- 12: Peak portion
- D: Depth of main groove
- E: Ground end
- H: Height
- H1: Maximum height of projection in peak portion
- H2: Minimum height of projection in trough portion
- S: Stone

### BEST MODE FOR CARRYING OUT THE INVENTION

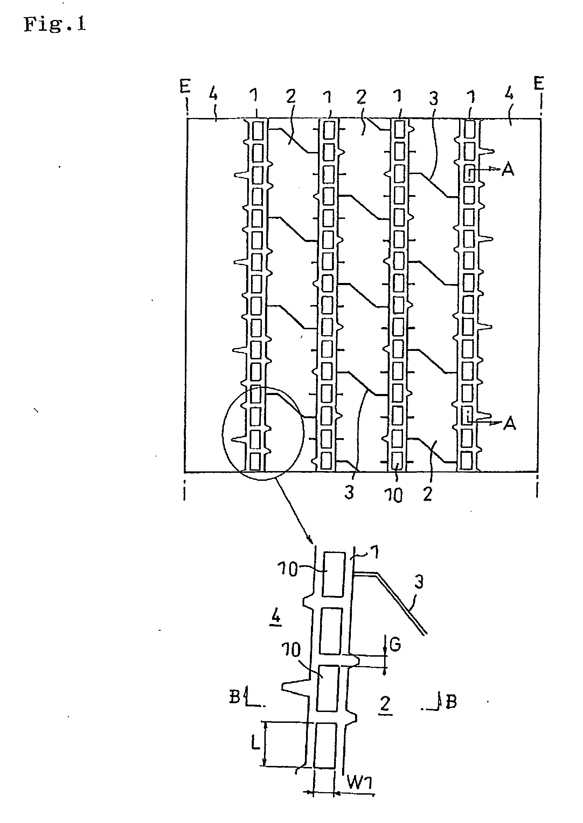

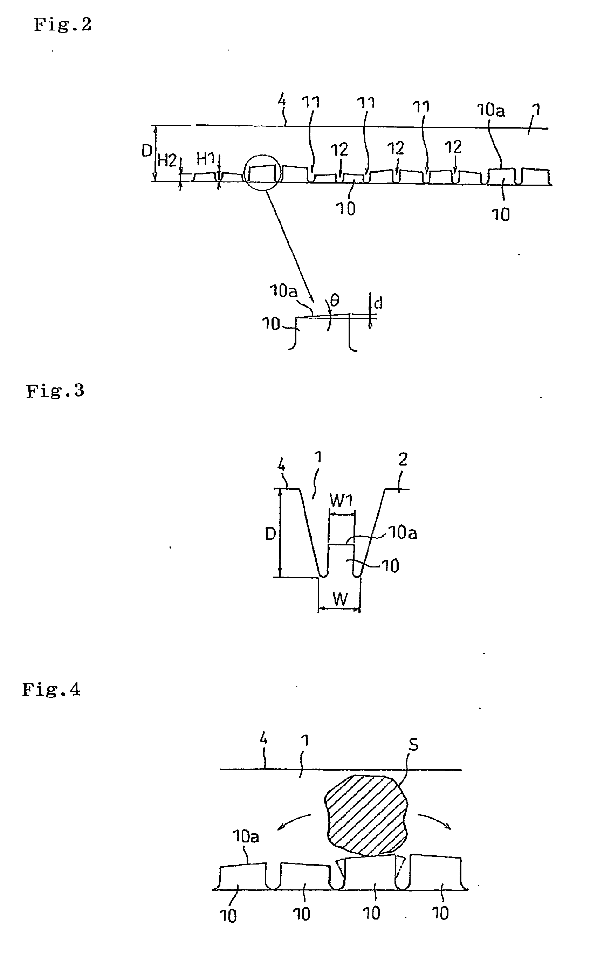

An embodiment of the present invention will be explained with reference to the drawings. Fig. 1 is an expansion plan view showing one example of a tread pattern of a pneumatic tire according to the present invention. Fig. 2 is a cross sectional view as seen from an arrow A-A in Fig. 1. Fig. 3 is a cross sectional view as seen from an arrow B-B in Fig. 1.

A main groove 1 extending along a tire circumferential direction is provided in a tread surface of a pneumatic tire according to the present invention, as shown in Fig. 1. In the present embodiment, the tread surface is provided with four main grooves 1 extending linearly in the tire circumferential direction, a transverse groove 3 sectionalizing a land portion between the main grooves 1 into blocks 2, and shoulder ribs 4 extending continuously in the tire circumferential direction in an outer side of the main groove 1 positioned in an outermost side in a tire width direction. Note that a ground end is indicated by reference numeral E.

In the present embodiment, a plurality of projections 10 having different heights are provided in a groove bottom of each of four main grooves 1. The plurality of projections 10 are provided in the groove bottom of the main groove 1 by inclining outer circumferential surfaces 10a in such a manner as to repeat trough portions 11 depressed to an inner side in a tire diametrical direction and peak portions 12 protruding to an outer side in the tire diametrical direction along the tire circumferential direction, as shown in Fig. 2.

Describing in more detail, the outer peripheral surface 10a of each of the projections 10 is inclined at a fixed inclination in a tapered shape from one end portion in the tire circumferential direction toward the other end portion, in such a manner that directions of inclination are inverted between the adjacent projections 10, and alternately repeatedly has the trough portions 11 formed by inclining the outer peripheral surfaces 10a of the adjacent projections 10 in the tire circumferential direction to the inner side in the tire diametrical direction toward a direction coming close to each other, and the peak portions 12 formed by inclining the outer peripheral surfaces 10a of the adjacent projections 10 in the tire circumferential direction to the outer side in the tire diametrical direction toward a direction coming close to each other.

Since a plurality of projections 10 are provided in such a manner as to repeat the trough portions 11 and the peak portions 12 in the tire circumferential direction as mentioned above, a stone getting into the main groove 1 is hard to stay at a specific position, in the case where a stone holding is generated, in the present invention.
Further, since the projection 10 which are varied in height can move the stone S via the inclined outer peripheral surface 10a when elastically deforming along the tire circumferential direction, it is possible to discharge the stone S out of the main groove 1 by the centrifugal force arising in connection with the tire rolling motion in cooperation with the effect that the stone S is hard to stay as mentioned above.

Further, in accordance with the present invention, since the projections 10 having the different heights are provided in the groove bottom of the main groove 1 along the tire circumferential direction, it is possible to intermittently or continuously change a frequency band of a pipe resonance noise by varying the volumetric capacity of the closed space formed by the main groove 1 and the road surface at the time of grounding.
Accordingly, it is possible to inhibit the frequency of the pipe resonance noise from coinciding with the frequency generating a pitch peak noise which is defined by a pattern pitch of the tread surface and a traveling speed, and it is possible to prevent the peak of the noise level from being generated so as to reduce the car exterior noise.

As mentioned above, the tire positively moves the stone along the tire circumferential direction (along the extending direction of the main groove 1) while inhibiting the stone in the main groove 1 from staying at the specific position, and with such an operation, it is possible to preferably achieve a stone discharging effect caused by a centrifugal force or the like arising in connection with the tire rolling motion. On the contrary, in the conventional tire in which the projection continuously extends in the tire circumferential direction, not only it is impossible to achieve the operation moving the stone along the tire circumferential direction by the projection, but also a groove volumetric capacity is reduced by the projection, so that there is fear that wet performance is lowered.

A difference of height d between a highest portion and a lowest portion of the projection 10 is preferably equal to or more than 0.5 mm, and more preferably equal to or more than 1.0 mm. Accordingly, it is possible to suitably achieve the operation moving the stone getting into the main groove 1 along the tire circumferential direction. Further, an angle θ of inclination of the outer peripheral surface 10a of the projection 10 is preferably equal to or less than 35°, and more preferably equal to or less than 20°. Accordingly, it is possible to suppress a degree of forming an apex of the projection 10 acute so as to prevent a damage such as a deficit or the like.

A height of each of the projections 10 is lower than a depth D of the main groove 1, and the projections which are relatively higher and the projections which are relatively lower are arranged regularly or in a random order. A maximum height H1 of the projection 10 in the peak portion 12 is preferably between 10 and 35 % the depth D of the main groove 1 from the groove bottom of the main groove 1, and more preferably between 25 and 35 %.
If this rate is less than 10 %, variations of height of the projections 10 become small, so that an effect of reducing a car exterior noise tends to become small. On the other hand, if the rate is over 35 %, there is generated a risk that the stone is held between the projection 10 having a low rigidity and the side wall of the main groove 1.

In the present embodiment, the heights of a pair of projections 10 forming the peak portion 12 are approximately equal, and all of the peak portions 12 protrude in an inverse V-shaped form to an outer side in the tire diametrical direction. With such a structure, the wall surface in the tire circumferential direction of one of the projections 10 forming the peak portion 12 does not protrude largely from the other, it is possible to prevent the deficit or the like from being generated by the stone contact. Further, in the present embodiment, a part of the trough portion 11 is depressed in a V-shaped form to an inner side in the tire diametrical direction, and it is possible to more effectively prevent the stone from staying at that position.

A minimum height H2 of the projection 10 in the trough portion 11 is preferably equal to or more than 2.5 mm from the groove bottom of the main groove 1, and more preferably equal to or more than 3.5 mm. Accordingly, it is possible to effectively prevent the stone from reaching the groove bottom of the main groove 1 so as to more suitably prevent the tire from being damaged.

As shown in Fig. 1, assuming that a maximum width of the projection 10 is set to W1, and a tire circumferential length of the projection 10 is set to L, the both preferably satisfy a relationship 70 % ≤ L/W1 ≤ 200 %, and more preferably satisfy 85 % ≤ L/W1 ≤ 160 %. If it is less than 70 %, the projection 10 tends to be crushed without collapsing in the circumferential direction when the stone gets thereinto. Accordingly, the effect of moving the stone tends to become smaller. On the other hand, if it is over 200 %, the projection 10 becomes too elongated in the tire circumferential direction. Accordingly, the operation of moving the stone along the tire circumferential direction tends to become smaller.

Further, a gap G of the projections 10 adjacent in the tire circumferential direction is preferably equal to or more than 1 mm. Accordingly, it is possible to secure a space when the projection 10 elastically deforms and moves along the tire circumferential direction(see Fig.4), and it is possible to suitably achieve the operation of moving the stone getting into the main groove 1. Further, the gap G is preferably equal to or less than 5 mm in the view of preventing the stone from being held between the adjacent projections 10.

As shown in Fig. 3, assuming that the groove bottom width of the main groove 1 is set to W, a relationship to the maximum with W1 of the projection 10 preferably satisfies a relationship 30 % ≤ W1/W ≤ 70 %, and more preferably satisfies 40 % ≤ W1/W ≤ 60 %. If it is less than 30 %, the rigidity of the projection 10 is lowered. Accordingly, there is generated a risk that the stone is held between the projection and the side wall of the main groove 1.
On the other hand, if it is over 70 %, a curvature of a boundary between the side wall of the main groove 1 forming a circular arc-shaped curved surface and the groove bottom becomes large. Accordingly, there is a tendency that a groove bottom crack is hard to be prevented.

In the present invention, a cross sectional shape of the projection 10 is not particularly limited, but may employ a shape, such as a square, a trapezoid, and a shape in which a width is gradually reduced from the groove bottom of the main groove 1 toward a tread surface side. Further, a cross sectional shape of the main groove 1 is also not particularly limited, but may employ a shape in which the side wall extends in a direction of a normal line of the tread surface in place of a shape in which the side wall is inclined as shown in Fig. 3.

Since the pneumatic tire according to the present invention achieves the above-mentioned operation and effect and is excellent in the stone discharging performance, it is particularly useful as a pneumatic tire for a heavy load which has a lot of occasions of traveling on a dirt road. The pneumatic tire for the heavy load is used in a vehicle having a comparatively heavy vehicle total weight such as a truck, a bus or the like.

Note that, in the general pneumatic tire for the heavy load, the groove bottom width W of the main groove 1 is preferably between 2 mm and 16 mm, and more preferably between 4 mm and 12 mm. Further, an angle of inclination of the side wall of the main groove 1 with respect to the direction of the normal line of the tread surface is preferably between 0° and 20°.

The pneumatic tire in accordance with the present invention is the same as a normal pneumatic tire except that the projections as mentioned above are provided in the main groove of the tread surface, and the known material, shape, structure, manufacturing method and the like can be applied to the present invention.

### Other Embodiment

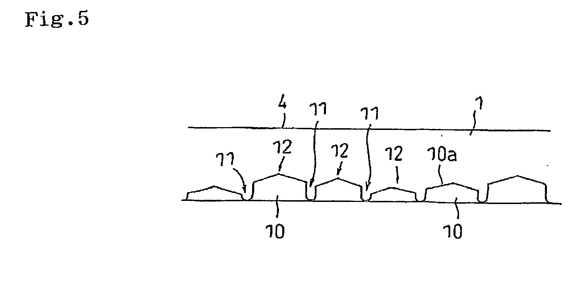

(1) The tread pattern of the pneumatic tire according to the present invention is not particularly limited as far as it is provided with the main groove extending along the tire circumferential direction in the tread surface. Accordingly, in the above-described embodiment, there is shown the example in which the main groove provided with the projections extends linearly in the tire circumferential direction, and the land portion is sectionalized into the blocks and the rib, however, the main groove may extend in a zigzag manner, or all the land portions may be formed by the ribs.
(2) In the above-described embodiment, there is shown the example in which the projections are provided in the groove bottoms of all the main grooves, however, such projections may be provided only in the groove bottoms of a part of the main grooves, in the present invention.
(3) In the above-described embodiment, there is shown the example in which the outer peripheral surface of each of the projections is inclined at the fixed inclination in the tapered shape, however, the present invention is not limited thereto, but can employ, for example, a shape as shown in Fig. 5.
In this example, the peak portion 12 is formed by inclining the outer peripheral surface 10a of the projection 10 to the outer side in the tire diametrical direction from both end portions in the tire circumferential direction toward the center portion. Even in such a case, it is possible to preferably achieve the effect of improving the above-mentioned stone discharging performance, and the effect of reducing the car exterior noise.

### EXAMPLE

An example tire which concretely shows the structure and effect of the present invention will be explained. An evaluation of each of performances is executed as follows.

### (1) Stone discharging performance

A test tire was installed to front wheels of a long distance transport truck while setting a pneumatic pressure to 750 kPa and a rim size to 22.5 x 7.50, and the number of the stones wedged between the main grooves was counted after traveling 80000 km on a dry road surface.

### (2) Noise characteristic

A tire single bench test (JASO C606-81) was carried out while setting a pneumatic pressure to 700 kPa, a load to 278 N and a rim size to 22.5 x 7.50, and a noise level (dB(A)) was measured at a speed 80 km/h.

### Comparative Example 1

As a Comparative Example 1, a pneumatic tire in which a height of a projection is fixed and an outer peripheral surface of the projection is not inclined, in the tread pattern shown in Fig. 1, was used. A tire size is 11R22.5 14PR, a depth D of the main groove is 13.8 mm, a groove bottom width W of the main groove is 6 mm, and a width of the projection is 4 mm. These dimensions are the same in the other examples. Further, a tire circumferential length L of the projection is 6 mm, a gap G of the projection is 1.5 mm, and a height of the projection is fixed to 4.5 mm.

### Comparative Example 2

As a Comparative Example 2, a pneumatic tire in which the height of the projection is variously different and the outer peripheral surface of the projection is not inclined, in the tread pattern shown in Fig. 1, was used. The tire circumferential length L of the projection and the gap G of the projection are the same as the comparative example 1, and the range of the height of the projection is between 2.5 mm and 4.5 mm.

### Comparative Example 3

As a Comparative Example 3, a pneumatic tire in which the projection continuously extends in the tire circumferential direction and the height thereof is periodically changed, in the tread pattern shown in Fig. 1, was used. The projection is formed in an annular shape in the tire circumferential direction, the gap G of the projection is 0 mm, and the range of the height of the projection is between 2.5 mm and 4.5 mm.

### EXAMPLE

As an example, a pneumatic tire in which the height of the projection is variously different and the outer peripheral surface of the projection is inclined in such a manner that the trough portions and the peak portions are repeated, in the tread patterns shown in Figs. 1 and 2, was used. The tire circumferential length L of the projection and the gap G of the projection are the same as the comparative example 1, a range of a height H1 of the projection is between 3.0 mm and 4.8 mm, a height H2 is equal to or more than 2.5 mm, a height difference d between a highest portion and a lowest portion of the projection is equal to or more than 0.5 mm, and an angle θ of inclination of the outer peripheral surface of the projection is equal to or less than 20°. Results of the evaluation are shown in Table 1.

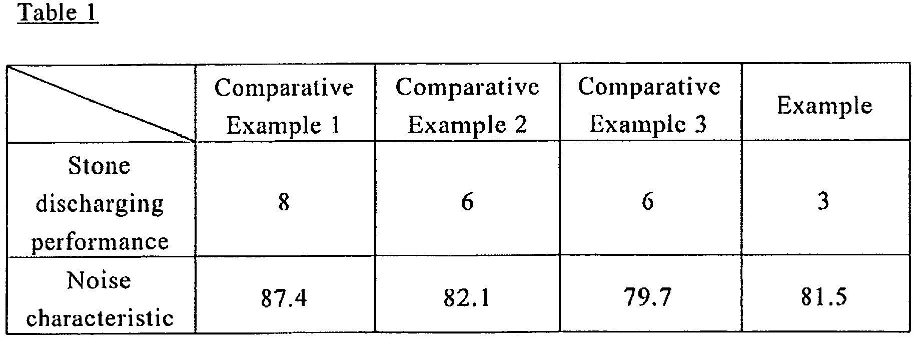

From Table 1, it is known that it is possible to reduce the car exterior noise while improving the discharging performance of the stone getting into the main groove in the example, in comparison with the Comparative Examples 1 to 3. Although the wet performance was not evaluated, it is expected to achieve a more excellent wet performance in the example than in the Comparative Example 3, based on a magnitude relationship of the groove volumetric capacity.

## Claims

1. A pneumatic tire comprising a main groove (1) extending along a tire circumferential direction in a tread surface,
wherein a plurality of projections (10) having different heights are provided in a groove bottom of the main groove (1) in such a manner that an outer peripheral surface (10a) is inclined so as to repeat trough portions (11) depressed to an inner side in a tire diametrical direction and peak portions (12) protruding to an outer side in the tire diametrical direction along the tire circumferential direction,
wherein the outer peripheral surface (10a) of each of the projections (10) is inclined at a fixed inclination in a tapered shape from one end portion in the tire circumferential direction toward the other end portion, in such a manner that directions of inclination are inverted between the adjacent projections (10), and alternately repeatedly has the trough portions (11) formed by inclining the outer peripheral surfaces (10a) of the adjacent projections (10) in the tire circumferential direction to the inner side in the tire diametrical direction toward a direction coming close to each other, and the peak portions (12) formed by inclining the outer peripheral surfaces (10a) of the adjacent projections (10) in the tire circumferential direction to the outer side in the tire diametrical direction toward a direction coming close to each other.

2. The pneumatic tire according to claim 1,
wherein a maximum height (H1) of the projection (10) in the peak portion (12) is between 10 and 3 5 % a depth (D) of the main groove (1) from the groove bottom of the main groove (1), and a minimum height (H2) of the projection (10) in the trough portion (11) is equal to or more than 2.5 mm from the groove bottom of the main groove (1).

3. The pneumatic tire according to any of claims 1 or 2,
wherein a part or all of the trough portions (11) are depressed in a V-shaped form to the inner side in the tire diametrical direction, and a part or all of the peak portions (12) protrude in an inverted V-shaped form to the outer side in the tire diametrical direction.

## Patentansprüche

1. Luftreifen mit einer Hauptnut (1), die sich in Reifenumfangsrichtung in einer Lauffläche erstreckt,
wobei eine Vielzahl von Vorsprüngen (10) mit unterschiedlichen Höhen an einem Nutboden der Hauptnut (10) derart vorgesehen sind, daß eine Außenumfangsfläche (10a) derart geneigt ist, daß sich Vertiefungsbereiche (11), die in Reifendurchmesserrichtung zu einer Innenseite vertieft ausgebildet sind, und Erhebungsbereiche (12), die in Reifendurchmesserrichtung zu einer Außenseite vorstehend ausgebildet sind, in Reifenumfangsrichtung abwechseln,
wobei die Außenumfangsfläche (10a) von jedem der Vorsprünge (10) mit einer feststehenden Neigung in abgeschrägter Form von dem einen Endbereich in Reifenumfangsrichtung in Richtung auf den anderen Endbereich derart geneigt ist, daß Neigungsrichtungen zwischen den einander benachbarten Vorsprüngen (10) invertiert sind und in sich wiederholender und abwechselnder Weise die Vertiefungsbereiche (11) unter Neigung der Außenumfangsflächen (10a) der einander benachbarten Vorsprünge (10) in der Reifenumfangsrichtung zur Innenseite in der Reifendurchmesserrichtung in einer Richtung, in der sie einander nahe kommen, gebildet sind und die Erhebungsbereiche (12) unter Neigung der Außenumfangsflächen (10a) der einander benachbarten Vorsprünge (10) in der Reifenumfangsrichtung zur Außenseite in der Reifendurchmesserrichtung in einer Richtung, in der sie einander nahe kommen, gebildet sind.

2. Luftreifen nach Anspruch 1,
wobei die maximale Höhe (H1) des Vorsprungs (10) in dem Erhebungsbereich (12) zwischen 10 % und 35 % der Tiefe (D) der Hauptnut (1) von dem Nutboden der Hauptnut (1) beträgt und die minimale Höhe (H2) des Vorsprungs (10) in dem Vertiefungsbereich (11) einen Wert von 2,5 mm oder mehr von dem Nutboden der Hauptnut (1) besitzt.

3. Luftreifen nach einem der Ansprüche 1 oder 2,
wobei ein Teil der oder sämtliche Vertiefungsbereiche (11) mit einer V-Form in Reifendurchmesserrichtung zu der Innenseite vertieft ausgebildet sind und ein Teil der oder sämtliche Erhebungsbereiche (12) umgekehrt V-förmig in der Reifendurchmesserrichtung zu der Außenseite vorstehend ausgebildet sind.

## Revendications

1. Bandage pneumatique comprenant une gorge principale (1) s'étendant le long d'une direction circonférentielle du pneumatique dans une surface de roulement,
dans lequel une pluralité de projections (10) ayant différentes hauteurs sont prévues dans un fond de gorge de la gorge principale (1) de telle manière qu'une surface périphérique extérieure (10a) est inclinée de façon à répéter des portions en auge (11) en creux vers un côté intérieur dans une direction diamétrale du pneumatique et des portions en pointe (12) qui se projettent vers un côté extérieur dans la direction diamétrale du pneumatique le long de la direction circonférentielle du pneumatique,
dans lequel la surface périphérique extérieure (10a) de chacune des projections (10) est inclinée sous une inclinaison fixe dans une forme effilée depuis une portion terminale dans la direction circonférentielle vers l'autre portion terminale, d'une manière telle que les directions d'inclinaison sont inversées entre les projections adjacentes (10), et de manière alternative et répétée, les portions en auge (11) sont formées en inclinant les surfaces périphériques extérieures (10a) des projections adjacentes (10) dans la direction circonférentielle du pneumatique du côté intérieur dans la direction diamétrale du pneumatique vers une direction venant en rapprochement les unes des autres, et les portions en pointe (12) sont formées en inclinant les surfaces périphériques extérieures (10a) des projections adjacentes (10) dans la direction circonférentielle du pneumatique du côté extérieur dans la direction diamétrale du pneumatique vers une direction venant en rapprochement les unes des autres.

2. Bandage pneumatique selon la revendication 1,
dans lequel une hauteur maximum (H1) de la projection (10) dans la portion en pointe (12) est entre 10 % et 35 % d'une profondeur (D) de la gorge principale (1) depuis le fond de gorge de la gorge principale (1), et une hauteur minimum (H2) de la projection (10) dans la portion en auge (11) est égale ou supérieure à 2,5 mm depuis le fond de la gorge principale (1).

3. Bandage pneumatique selon l'une quelconque des revendications 1 ou 2,
dans lequel une partie de ou toutes les portions en auge (11) sont en creux avec une forme en V du côté intérieur dans la direction diamétrale du pneumatique, et une partie de ou toutes les portions en pointe (12) se projettent avec une forme en V inversé du côté extérieur dans la direction diamétrale du pneumatique.
